# EUROPEAN PATENT APPLICATION

(11) **EP 2 860 185 A1**
(43) Date of publication of application: **15.04.2015**
(21) Application number: 13004845.7
(22) Date of filing: 09.10.2013
(51) Int. Cl.: C07F 9/6561

(54) **An improved process for the preparation of Tenofovir disoproxil and pharmaceutically acceptable salts thereof**

(71) Applicant: Zentiva, k.s., 102 37 Praha 10 (CZ); Institute Of Organic Chemistry And Biochemistry As CR, V.V.I., 16610 Praha 6 (CZ)
(72) Inventor: Janeba, Zlatko, 190 16 Praha 9 (CZ); Jansa, Petr, 563 01 Lanskroun (CZ); Kolman, Viktor, 148 00 Praha 4 (CZ); Baszczynski, Ondrej, 73951 Dobra (CZ); RAK, Jakub, 323 00 Pizen (CZ); Ridvan, Ludek, 102 00 Praha 10 (CZ); Kral, Vladimir, 120 00 Praha 2 (CZ)
(74) Representative: Jirotkova, Ivana

(57) **Abstract**

An improved process for the preparation of Tenofovir disoproxil and pharmaceutically acceptable salts thereof, comprising following steps:
a) alkylation of adenine with (*R*)-4-methyl-1,3-dioxolan-2-one and isolation of (*R*)-1-(6-amino-9*H*-purin-9-yl)propan-2-ol;
b) alkylation of (*R*)-1-(6-amino-9*H*-purin-9-yl) propan-2-ol with a dialkyl p-toluenesulphonyloxymethylphosphonate or dialkyl halomethylphosphonate to give dialkylester of (R)-9-[2-(phosphonomethoxy)propyl]adenine;
c) preparation of (R)-9-[2-(phosphonomethoxy)propyl]adenine ((*R*)-PMPA; Tenofovir) by dealkylation of the phosphonate moiety with a mineral acid under microwave irradiation;
d) preparation of Tenofovir disoproxil;
e) preparation of the fumarate salt or other pharmaceutically acceptable salt of Tenofovir disoproxil.

## Description

### Filed of the Invention

The present invention relates to an improved process for the preparation of Tenofovir disoproxil and pharmaceutically acceptable salts thereof. The chemical name of Tenofovir disoproxil is 9-[-2-(R)-[[bis[[(isopropoxycarbonyl)oxy] methoxy]phosphinoyl]methoxy] propyl] adenine represented by the following structure:

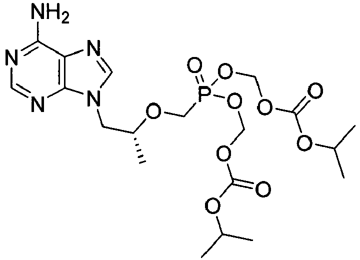

The above compound is a highly potent antiviral agent, particularly for the therapy or prophylaxis of retroviral infections and belongs to a class of drugs called Nucleotide Reverse Transcriptase Inhibitors (NRTI) which block reverse transcriptase, an enzyme crucial to viral production in HIV-infected people.

Tenofovir disoproxil is used for the preparation of pharmaceutical compositions (e.g. Viread, Truvada, etc.) in the form of its fumarate salt.

### Background of the Invention

The following procedures of preparation of Tenofovir Disoproxil Fumarate and Tenofovir Disoproxil Hemifumarate are known from the literature and patents:

U.S. Pat. No. 5,733,788 discloses the process for the preparation of (R)-9-[2-(phosphonomethoxy)propyl]adenine which involves condensation of (R)-9-[2-(hydroxyl)propyl]adenine and diethyl p-toluenesulfonyloxy methylphosphonate in presence of Lithium hydride in Dimethylformamide followed by dealkylation with Bromotrimethylsilane in Acetonitrile.

U.S. Pat. No. 5,922,695 discloses the synthetic route for the preparation of (R)-9-[2-(phosphonomethoxy)propyl]adenine by condensation of (R)-9-[2-(hydroxyl)propyl]adenine with diethyl p-toluenesulfonyloxymethyl phosphonate in presence of lithium tert-butoxide in tetrahydrofuran followed dealkylation with bromotrimethylsilane in acetonitrile. Further, Tenofovir disoproxil is obtained as oil which is further converted to fumarate salt. (R)-9-[2-(hydroxyl)propyl]adenine is prepared by alkylation of adenine with (R)-4-methyl-1,3-dioxolan-2-one in DMF solvent and at presence of NaOH.

US 2004/0018150 discloses a process for the preparation of (R)-9-[2-(phosphonomethoxy)propyl]adenine where diethyl p-toluenesulfonyloxymethyl phosphonate is condensed with (R)-9-[2-(hydroxyl)propyl]adenine in presence of magnesium isopropoxide or magnesium tert-butoxide in dimethylformamide medium followed by dealkylation with bromotrimethylsilane in acetonitrile with an overall yield 48%.

U.S. Pat. No. 6,465,649 discloses a process for the preparation of (R)-9-[2-(phosphonomethoxy)propyl] adenine by dealkylation of (R)-9-[2-(diethyl phosphonomethoxy)propyl]adenine with chlorotrimethylsilane in chloroform under pressure.

The above prior art processes describe the processes which involve the usage of highly corrosive and expensive reagents like bromotrimethylsilane and chlorotrimethylsilane which require special handling procedures. Such differences provide a compelling basis to develop simple dealkylation procedure for Phosphonate ester with improved yields without using expensive, corrosive, and dangerous reagents like trialkylsilylhalides.

A number of processes for the preparation of Tenofovir disoproxil have been disclosed. In all the prior art references Tenofovir disoproxil is converted to its fumarate salt without isolating the pure Tenofovir disoproxil. Solvent commonly used for preparation of Tenofovir disoproxil fumarate or Tenofovir disoproxil hemifumarate and subsequent washing of filtrate is isopropanol as described in these patents: U.S. Pat. No. 5,922,695 (Antiviral phosphonomethyoxy nucleotide analogs having increased oral bioavailability), WO2011111074 (An improved process for the preparation of tenofovir disoproxil fumarate), WO2010026603 (Novel amine salts of tenofovir, process for producing the same and use thereof in production of tenofovir disoproxil), US2009286981 (Process for the prepartion of tenofovir), US20130005969 (Process for the preparation of tenofovir disoproxil fumarate), WO2008007392 (An improved process for the preparation of tenofovir) and WO9905150 (Nucleotide analog composition and synthesis method). Rarely used for preparation of Tenofovir disoproxil fumarate and subsequent washing of filtrate is isopropyl acetate (WO9804569 - Nucleotide analogs). In literature (Org. Proc. Res. Des. 2010, 14, 1194) there is described also described preparation in isopropanol and washing using mixture isopropanol/cyclohexane. Preparation of Tenofovir disoproxil fumarate from pure tenofovir disoproxil using 1-methyl-2-pyrrolidone, dimethyl sulfoxide, methylene dichloride or isopropanol for preparation and isopropyl acetate for washing, (WO2009130437 - Crystalline form of tenofovir disoproxil and a process for its) is also described.

The processes mentioned above have the disadvantage that it is difficult to separate the intermediates formed during the process, from the end product and, accordingly, extensive purification procedures are required in order to obtain the necessary quality of the end product.

It is also observed that while storing Tenofovir disoproxil in liquid state it is being converted to mono ester of Tenofovir which leads to lowering the yield of final product with inferior quality.

More efficient process for the synthesis of Tenofovir and Tenofovir Disoproxil has been found using novel chemicals and synthetic procedures.

A method has been developed for conversion of Tenofovir disoproxil to its fumarate salt without isolating the pure Tenofovir disoproxil with greatly improved yield. Similarly, the crude Tenofovir disoproxil (without isolating) has been converted into other pharmaceutically acceptable salts.

### Summary of the Invention

An improved process for the preparation of Tenofovir disoproxil and pharmaceutically acceptable salts thereof comprising following steps:
a) alkylation of adenine with (*R*)-4-methyl-1,3-dioxolan-2-one and isolation of (*R*)-1-(6-amino-9*H*-purin-9-yl)propan-2-ol;
b) alkylation of (*R*)-1-(6-amino-9*H*-purin-9-yl) propan-2-ol with dialkyl p-toluenesulphonyloxymethylphosphonate or dialkyl halomethylphosphonate to give a dialkylester of (*R*)-9-[2-(phosphonomethoxy)propyl]adenine;
c) preparation of (*R*)-9-[2-(phosphonomethoxy)propyl]adenine ((*R*)-PMPA; Tenofovir) by dealkylation of the phosphonate moiety with a mineral acid under microwave irradiation;
d) preparation of Tenofovir disoproxil;
e) preparation of the fumarate salt or other pharmaceutically acceptable salt of Tenofovir disoproxil.

This new and efficient manufacturing process uses some novel chemicals and synthetic procedures and provides Tenofovir disoproxil or pharmaceutically acceptable salt thereof with greatly improved yield.

### Detailed Description of the Invention

Improved process for Tenofovir disoproxil synthesis and salts thereof comprising following steps:
a) alkylation of adenine with (*R*)-4-methyl-1,3-dioxolan-2-one to give (*R*)-1-(6-amino-9*H-*purin-9-yl)propan-2-ol;
b) alkylation of (*R*)-1-(6-amino-9*H*-purin-9-yl) propan-2-ol with dialkyl p-toluenesulphonyloxymethylphosphonate or dialkyl halomethylphosphonate to give diesters of (R)-9-[2-(phosphonomethoxy)propyl]adenine;
c) preparation of (R)-9-[2-(phosphonomethoxy)propyl]adenine ((*R*)-PMPA) by dealkylation of the phosphonate moiety;
d) preparation of Tenofovir disoproxil;
e) preparation of the fumarate salt (or other pharmaceutically acceptable salts) of Tenofovir disoproxil.

A scheme of synthesis of Tenofovir disoproxil fumarate follows.

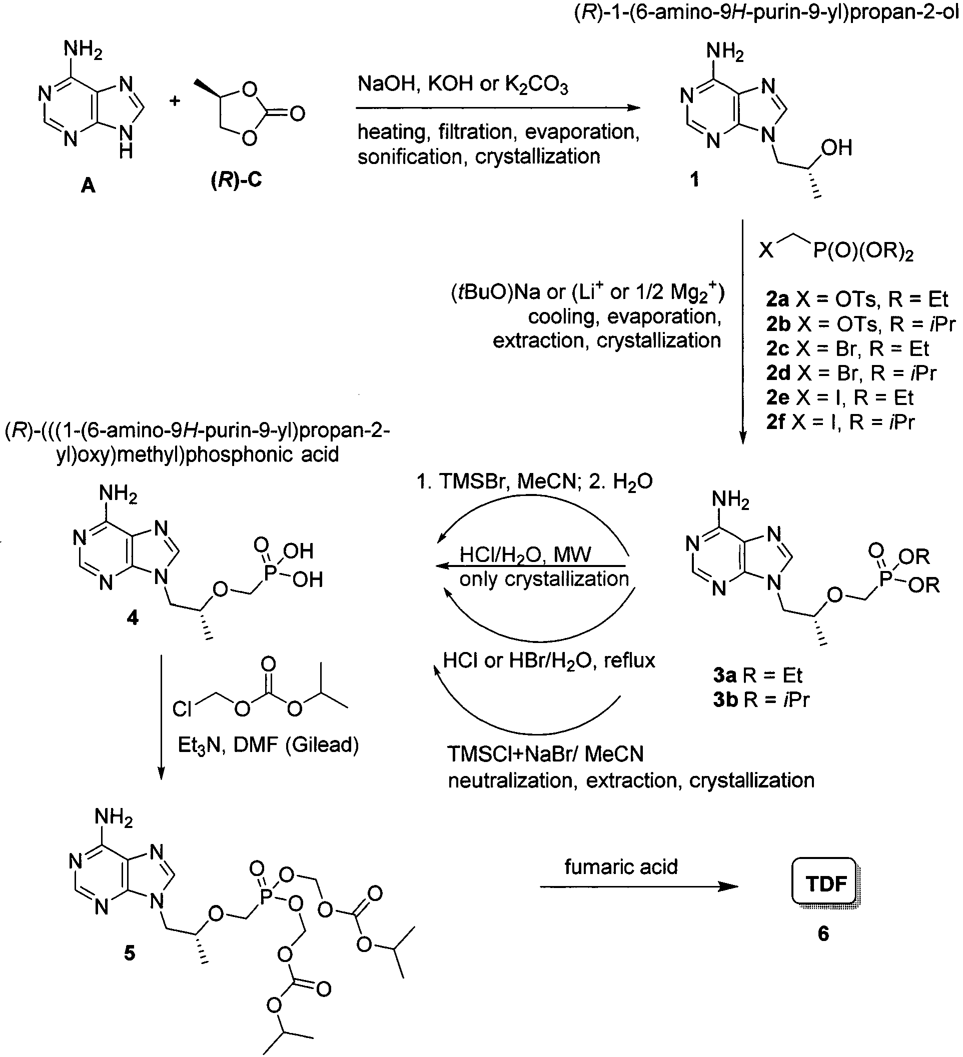

The present invention deals with manufacturing steps a), b), c) and e):
a) alkylation of adenine with (*R*)-4-methyl-1,3-dioxolan-2-one to give (*R*)-1-(6-amino-9*H-*purin-9-yl)propan-2-ol
   The invention relates to an improved method for the alkylation of adenine with (R)-4-methyl-1,3-dioxolan-2-one to offer (R)-1-(6-amino-9H-purin-9-yl)propan-2-ol in high yield and purity. The reaction is performed in DMF solvent at presence of NaOH or K₂CO₃. The reaction mixture is consequently filtered and the filtrate is concentrate to 1/3 of the DMF solvent. This only partial evaporation of DMF from the reaction mixture which helps to dissolve undesired by-products and other impurities during crystallization is a part of the invention. Following addition of EtOH to the crude reaction mixture is another embodiment of the invention. The addition of EtOH under sonication converts one of the by-products, the N-6 formylated derivative, to the desired product, (R)-1-(6-amino-9H-purin-9-yl)propan-2-ol.
   The combination of small amount of DMF, EtOH addition, and sonication leads to easy crystallization of (R)-1-(6-amino-9H-purin-9-yl)propan-2-ol. The resulting product (R)-1-(6-amino-9H-purin-9-yl)propan-2-ol is thus obtained in high yield and purity (98%) without need of involvement of any other purification method.
b) alkylation of (R)-1-(6-amino-9H-purin-9-yl)propan-2-ol with dialkyl p-toluenesulphonyloxymethylphosphonate or dialkyl halomethylphosphonate to give diesters of (R)-9-[2-(phosphonomethoxy)propyl]adenine
   The invention further relates to an improved method for the alkylation of (R)-1-(6-amino-9H-purin-9-yl)propan-2-ol in high yield using any dialkyl halomethylphosphonate, wherein halogen is Br or I, or dialkyl p-toluensulphonyloxymethylphosphonate, wherein dialkyl means diethyl or diisopropyl. Preferred phosphonate compounds according to the invention are: diethyl bromomethylphosphonate, diisopropyl bromomethylphosphonate, diethyl iodomethylphosphonate, diisopropyl iodomethylphosphonate or diisopropyl p-toluenesulphonyloxymethylphosphonate.
c) preparation of (R)-9-[2-(phosphonomethoxy)propyl]adenine ((*R*)-PMPA) by dealkylation of the phosphonate moiety
   The further embodiment the invention relates to an improved preparation of Tenofovir, which comprises dealkylation of diethyl ester phosphonates or diisopropyl ester phosphonates with mineral acids under microwave irradiation at a temperature of 25 to 110° C, preferably 90 to 95° C. The mineral acids are selected from a group consisting of aq. HBr, aq. HCl, HBr in acetic acid and HCl gas in isopropyl alcohol; preferred mineral acids are aq. HBr and aq. HCl. Using of the microwave radiation leads to reducing the amount of the mineral acid sufficient in the reaction. The dealkylating agent is thus used in a molar ratio of 2 to 15, preferably 7.5-8.5. In another embodiment of the invention the obtained tenofovir is further crystallized from water or mixture water/EtOH (0 to 90% of EtOH content).
e) preparation of fumarate salt (or other pharmaceutically acceptable salts) of Tenofovir disoproxil
   Several solvents were tested in the preparation of Tenofovir pharmaceutically acceptable salt such as dihydrogenphosphate, hydrogensulphate, citrate, maleate, oxalate, saccharate, tartrate, salicylate, lactate, succinate, hemifumarate, in which Tenofovir disoproxil is treated with the appropriate acid. Toluene was identified as the most favourable solvent for the salt preparation. Alternatively a mixture of toluene and another solvent can be used, provided toluene content is at least 50% (V/V). Another embodiment of the invention is increasing a purity of the salt of Tenofovir Disoproxil by washing the salt with an organic solvent, such as toluene and mixtures thereof, or isopropanol and mixtures thereof, preferably 50-100% toluene (V/V), the most preferably 100% toluene.

### Characterization methods

### XRPD (X-Ray Powder Diffractometry):

Diffraction patterns were obtained with laboratory X'PERT PRO MPD PANalytical diffractometer, used radiation CuKα (λ = 1.542Å).

### Generator settings:

- excitation voltage 45 kV.
- anodic current 40 mA.

### Scan description:

- scan type - gonio
- measurement range 2 - 40° 2θ
- step size 0.01° 2θ
- step time: 0.5 s.

Samples were measured as received on Si plate (zero background holder).

Incident beam optics: programmable divergence slits (irradiated length 10 mm), 10 mm mask, 1/4° anti-scatter fixed slit, 0.02 rad Soller slits.

Diffracted beam optics: X'Celerator detector, scanning mode, active length 2.122°, 0.02 rad Soller slits, anti-scatter slit 5.0 mm, Ni filter.

**Tab. 1. XRPD - characteristic powder diffraction peaks of Tenofovir citrate Phase 1, 2 and 3**

| Phase 1 | | | Phase2 | | | Phase 3 | | |
|---|---|---|---|---|---|---|---|---|
| Pos. [°2Th.] | d-spacing [A] | Rel.Int. [%] | Pos. [°2Th.] | d-spacing [A] | Rel. Int. [%] | Pos. [°2Th.] | d-spacing [A] | Rel. Int. [%] |
| 4.87 | 18.115 | 44.9 | 5.56 | 15.882 | 16.0 | 3.08 | 28.681 | 9.1 |
| 5.62 | 15.720 | 13.3 | 7.77 | 11.367 | 100.0 | 6.13 | 14.410 | 52.5 |
| 7.82 | 11.300 | 100.0 | 10.43 | 8.475 | 6.8 | 7.12 | 12.404 | 16.3 |
| 8.23 | 10.729 | 49.9 | 11.23 | 7.870 | 10.2 | 7.52 | 11.746 | 100.0 |
| 9.75 | 9.067 | 61.5 | 12.14 | 7.285 | 5.6 | 8.00 | 11.038 | 18.4 |
| 10.98 | 8.055 | 40.7 | 14.26 | 6.207 | 14.1 | 9.22 | 9.587 | 47.6 |
| 11.29 | 7.830 | 46.8 | 15.27 | 5.797 | 22.2 | 9.81 | 9.011 | 32.7 |
| 12.72 | 6.952 | 28.8 | 15.50 | 5.712 | 17.8 | 10.24 | 8.635 | 34.7 |
| 13.71 | 6.456 | 16.8 | 15.99 | 5.538 | 17.3 | 11.55 | 7.657 | 10.5 |
| 14.27 | 6.200 | 20.0 | 16.99 | 5.215 | 22.5 | 12.32 | 7.177 | 52.4 |
| 14.69 | 6.026 | 26.9 | 17.61 | 5.034 | 17.6 | 13.69 | 6.462 | 23.3 |
| 15.38 | 5.758 | 87.4 | 19.70 | 4.504 | 11.7 | 14.22 | 6.224 | 9.8 |
| 16.02 | 5.527 | 16.0 | 20.17 | 4.399 | 24.4 | 14.71 | 6.019 | 22.7 |
| 16.75 | 5.289 | 46.0 | 20.99 | 4.229 | 13.4 | 15.30 | 5.786 | 31.8 |
| 17.15 | 5.165 | 26.5 | 21.92 | 4.051 | 7.4 | 15.75 | 5.621 | 11.0 |
| 17.70 | 5.008 | 33.2 | 22.29 | 3.985 | 9.0 | 16.39 | 5.403 | 16.8 |
| 19.20 | 4.620 | 48.2 | 24.76 | 3.593 | 4.3 | 17.57 | 5.045 | 39.8 |
| 19.53 | 4.541 | 56.0 | 28.78 | 3.100 | 2.8 | 17.97 | 4.932 | 53.1 |
| 20.18 | 4.396 | 28.5 | | | | 18.33 | 4.837 | 60.9 |
| 20.62 | 4.305 | 63.9 | | | | 18.53 | 4.785 | 34.3 |
| 21.09 | 4.209 | 22.0 | | | | 19.06 | 4.652 | 15.5 |
| 21.76 | 4.080 | 14.6 | | | | 20.05 | 4.424 | 32.8 |
| 22.39 | 3.968 | 18.7 | | | | 20.49 | 4.331 | 16.7 |
| 22.87 | 3.886 | 21.4 | | | | 21.25 | 4.177 | 22.4 |
| 24.55 | 3.623 | 13.2 | | | | 22.17 | 4.007 | 49.9 |
| 26.15 | 3.405 | 19.9 | | | | 22.64 | 3.925 | 9.7 |
| 26.63 | 3.345 | 10.7 | | | | 23.82 | 3.732 | 46.2 |
| 27.01 | 3.298 | 9.6 | | | | 24.80 | 3.587 | 92.3 |
| 28.75 | 3.103 | 7.6 | | | | 26.46 | 3.366 | 15.5 |
| 29.53 | 3.023 | 8.5 | | | | 27.50 | 3.241 | 13.1 |
| | | | | | | 27.91 | 3.194 | 13.9 |
| | | | | | | 28.22 | 3.160 | 41.8 |
| | | | | | | 29.65 | 3.011 | 18.3 |
| | | | | | | 30.40 | 2.938 | 10.1 |
| | | | | | | 31.10 | 2.874 | 10.9 |
| | | | | | | 34.42 | 2.603 | 13.8 |

**Tab. 2. XRPD - characteristic powder diffraction peaks of succinate Phase 1 and 2**

| Phase 1 | | | Phase 2 | | |
|---|---|---|---|---|---|
| Pos. [°2Th.] | d-spacing [A] | Rel. Int. [%] | Pos. [°2Th.] | d-spacing [A] | Rel.Int. [%] |
| 5.14 | 17.179 | 57.8 | 4.81 | 18.344 | 100.0 |
| 9.64 | 9.168 | 32.7 | 6.62 | 13.337 | 15.5 |
| 10.53 | 8.398 | 53.0 | 9.18 | 9.622 | 23.6 |
| 11.15 | 7.930 | 45.8 | 9.51 | 9.288 | 38.5 |
| 11.68 | 7.569 | 41.7 | 10.31 | 8.577 | 51.1 |
| 13.49 | 6.558 | 9.3 | 10.70 | 8.259 | 34.2 |
| 14.26 | 6.208 | 36.8 | 13.21 | 6.699 | 13.5 |
| 15.02 | 5.895 | 22.5 | 14.53 | 6.091 | 11.6 |
| 18.08 | 4.901 | 100.0 | 17.12 | 5.174 | 28.8 |
| 19.34 | 4.587 | 51.3 | 18.32 | 4.839 | 49.0 |
| 19.64 | 4.516 | 38.1 | 18.93 | 4.685 | 19.3 |
| 20.40 | 4.350 | 14.5 | 19.44 | 4.563 | 14.8 |
| 21.42 | 4.145 | 25.2 | 19.89 | 4.461 | 10.9 |
| 22.64 | 3.925 | 23.6 | 20.90 | 4.247 | 11.3 |
| 24.88 | 3.576 | 60.1 | 22.01 | 4.035 | 5.3 |
| 26.80 | 3.324 | 12.0 | 23.31 | 3.813 | 8.2 |
| 30.06 | 2.970 | 20.3 | 24.35 | 3.652 | 22.1 |
| 34.06 | 2.630 | 5.4 | 29.31 | 3.045 | 6.4 |

**Tab. 3. XRPD - characteristic powder diffraction peaks of Tenofovir fumarate Form I and Form A**

| Form I (fumarate) | | | Form A (hemifumarate) | | |
|---|---|---|---|---|---|
| Pos. [°2Th.] | d-spacing [A] | Rel. Int. [%] | Pos. [°2Th.] | d-spacing [A] | Rel. Int. [%] |
| 5.10 | 17.324 | 84.4 | 7.82 | 11.300 | 100.0 |
| 5.61 | 15.730 | 36.6 | 8.10 | 10.912 | 64.6 |
| 10.44 | 8.463 | 100.0 | 9.83 | 8.995 | 27.4 |
| 10.78 | 8.203 | 58.7 | 10.55 | 8.381 | 11.5 |
| 11.08 | 7.976 | 32.8 | 10.95 | 8.071 | 9.4 |
| 11.58 | 7.635 | 31.1 | 11.64 | 7.599 | 13.0 |
| 13.67 | 6.473 | 9.6 | 11.94 | 7.407 | 72.4 |
| 14.33 | 6.175 | 17.1 | 13.70 | 6.459 | 17.1 |
| 15.15 | 5.845 | 17.8 | 14.29 | 6.195 | 63.2 |
| 15.61 | 5.672 | 10.0 | 14.71 | 6.018 | 7.5 |
| 15.96 | 5.549 | 15.8 | 16.06 | 5.513 | 27.9 |
| 16.33 | 5.423 | 13.3 | 16.76 | 5.286 | 91.8 |
| 17.53 | 5.055 | 14.8 | 17.93 | 4.943 | 19.5 |
| 18.49 | 4.794 | 65.4 | 18.42 | 4.812 | 13.0 |
| 20.12 | 4.410 | 84.3 | 19.17 | 4.625 | 38.2 |
| 20.81 | 4.266 | 15.5 | 20.39 | 4.353 | 17.5 |
| 21.44 | 4.141 | 12.7 | 21.18 | 4.191 | 68.4 |
| 22.14 | 4.012 | 30.0 | 21.61 | 4.110 | 32.4 |
| 22.95 | 3.871 | 14.0 | 22.55 | 3.940 | 63.3 |
| 24.15 | 3.682 | 11.1 | 22.75 | 3.906 | 45.3 |
| 25.20 | 3.531 | 75.5 | 23.38 | 3.801 | 7.8 |
| 25.65 | 3.471 | 17.1 | 24.27 | 3.665 | 94.4 |
| 28.12 | 3.171 | 15.3 | 25.30 | 3.517 | 42.9 |
| 30.25 | 2.952 | 17.8 | 26.37 | 3.377 | 7.1 |
| | | | 28.49 | 3.130 | 6.4 |

**Tab. 4. XRPD - characteristic powder diffraction peaks of Tenofovir hydrogensulphate**

| Pos. [°2Th.] | d-spacing [A] | Rel.Int. [%] |
|---|---|---|
| 3.37 | 26.203 | 59.6 |
| 4.49 | 19.657 | 100.0 |
| 7.80 | 11.330 | 8.1 |
| 8.89 | 9.943 | 27.0 |
| 12.01 | 7.366 | 10.4 |
| 12.51 | 7.073 | 21.1 |
| 13.32 | 6.642 | 29.5 |
| 15.56 | 5.691 | 14.7 |
| 15.97 | 5.544 | 20.4 |
| 16.55 | 5.352 | 20.9 |
| 17.80 | 4.978 | 16.2 |
| 19.07 | 4.649 | 41.7 |
| 19.97 | 4.443 | 58.4 |
| 20.63 | 4.302 | 12.9 |
| 20.96 | 4.235 | 16.5 |
| 21.59 | 4.112 | 24.6 |
| 22.22 | 3.998 | 45.1 |
| 23.23 | 3.827 | 46.7 |
| 24.13 | 3.686 | 14.9 |
| 24.54 | 3.625 | 13.7 |
| 25.05 | 3.552 | 13.6 |
| 25.50 | 3.490 | 16.1 |
| 25.88 | 3.439 | 14.4 |
| 26.74 | 3.331 | 37.8 |
| 27.63 | 3.226 | 13.4 |
| 28.43 | 3.137 | 26.2 |
| 31.26 | 2.859 | 23.2 |
| 31.86 | 2.807 | 19.9 |

**Tab. 5. XRPD - characteristic powder diffraction peaks of Tenofovir maleate**

| Pos. [°2Th.] | d-spacing [A] | Rel. Int. [%] |
|---|---|---|
| 4.36 | 20.272 | 16.4 |
| 6.41 | 13.780 | 100.0 |
| 8.57 | 10.309 | 19.1 |
| 9.22 | 9.580 | 7.5 |
| 10.27 | 8.610 | 12.7 |
| 12.66 | 6.988 | 19.7 |
| 16.84 | 5.262 | 54.2 |
| 18.17 | 4.878 | 12.0 |
| 18.67 | 4.750 | 10.5 |
| 20.09 | 4.417 | 22.6 |
| 20.63 | 4.303 | 16.2 |
| 21.58 | 4.114 | 9.1 |
| 22.51 | 3.946 | 5.3 |
| 23.57 | 3.771 | 9.8 |
| 24.58 | 3.619 | 11.4 |
| 25.31 | 3.516 | 13.7 |
| 27.11 | 3.286 | 10.0 |

**Tab. 6. XRPD - characteristic powder diffraction peaks of Tenofovir dihydrogenphosphate**

| Pos. [°2Th.] | d-spacing [A] | Rel. Int. [%] |
|---|---|---|
| 5.65 | 15.636 | 100.0 |
| 7.67 | 11.517 | 63.0 |
| 9.53 | 9.275 | 17.2 |
| 12.42 | 7.124 | 48.9 |
| 13.61 | 6.501 | 36.9 |
| 14.50 | 6.105 | 17.8 |
| 15.57 | 5.688 | 19.5 |
| 15.84 | 5.592 | 26.8 |
| 16.41 | 5.398 | 45.1 |
| 16.78 | 5.281 | 18.8 |
| 17.02 | 5.206 | 30.3 |
| 18.40 | 4.819 | 6.7 |
| 18.67 | 4.749 | 10.7 |
| 19.10 | 4.642 | 7.6 |
| 20.40 | 4.350 | 20.0 |
| 21.22 | 4.184 | 25.0 |
| 22.42 | 3.962 | 67.7 |
| 22.75 | 3.905 | 17.5 |
| 22.97 | 3.869 | 13.5 |
| 24.06 | 3.696 | 22.7 |
| 25.01 | 3.558 | 21.1 |
| 25.40 | 3.503 | 29.4 |
| 26.67 | 3.340 | 5.6 |
| 27.52 | 3.239 | 4.3 |
| 28.54 | 3.125 | 4.3 |
| 29.48 | 3.027 | 2.6 |
| 30.23 | 2.954 | 2.8 |
| 30.73 | 2.907 | 2.4 |
| 32.14 | 2.783 | 12.7 |

**Tab. 7. XRPD - characteristic powder diffraction peaks of Tenofovir tartrate Phase 1, 2 and 3**

| Phase 1 | | | Phase 2 | | | Phase 3 (hemitartrate) | | |
|---|---|---|---|---|---|---|---|---|
| Pos. [°2Th.] | d-spacing [A] | Rel. Int. [%] | Pos. [°2Th.] | d-spacing [A] | Rel. Int. [%] | Pos. [°2Th.] | d-spacing [A] | Rel. Int. [%] |
| 5.39 | 16.385 | 100.0 | 3.34 | 26.471 | 100.0 | 4.43 | 19.935 | 100.0 |
| 8.03 | 10.997 | 36.6 | 7.38 | 11.963 | 15.9 | 10.30 | 8.584 | 16.3 |
| 8.82 | 10.016 | 70.0 | 7.62 | 11.586 | 15.6 | 10.88 | 8.126 | 5.4 |
| 9.22 | 9.585 | 64.2 | 9.96 | 8.870 | 23.6 | 11.54 | 7.660 | 19.5 |
| 9.52 | 9.283 | 42.5 | 10.74 | 8.228 | 9.3 | 12.54 | 7.050 | 5.2 |
| 10.41 | 8.490 | 29.6 | 12.96 | 6.823 | 4.7 | 13.23 | 6.686 | 21.8 |
| 12.03 | 7.350 | 10.1 | 14.47 | 6.115 | 8.2 | 13.79 | 6.415 | 5.3 |
| 12.88 | 6.868 | 54.3 | 15.27 | 5.796 | 3.5 | 16.48 | 5.376 | 41.6 |
| 13.32 | 6.640 | 54.0 | 16.20 | 5.467 | 6.1 | 17.13 | 5.171 | 16.7 |
| 13.67 | 6.472 | 81.1 | 16.70 | 5.304 | 3.8 | 17.40 | 5.094 | 22.7 |
| 14.55 | 6.083 | 37.9 | 17.64 | 5.025 | 9.9 | 17.99 | 4.927 | 13.4 |
| 15.79 | 5.606 | 41.5 | 18.01 | 4.921 | 7.7 | 18.83 | 4.710 | 11.8 |
| 16.63 | 5.326 | 16.0 | 19.13 | 4.635 | 18.5 | 20.19 | 4.394 | 77.8 |
| 17.11 | 5.179 | 17.1 | 19.55 | 4.536 | 32.5 | 20.83 | 4.261 | 21.6 |
| 18.10 | 4.898 | 44.6 | 20.54 | 4.320 | 7.4 | 21.38 | 4.153 | 12.8 |
| 19.26 | 4.606 | 20.6 | 20.89 | 4.249 | 6.9 | 24.26 | 3.666 | 34.3 |
| 19.82 | 4.477 | 26.0 | 21.30 | 4.168 | 9.6 | 27.19 | 3.277 | 10.2 |
| 20.24 | 4.385 | 34.1 | 21.56 | 4.118 | 17.1 | | | |
| 20.88 | 4.251 | 33.4 | 22.92 | 3.876 | 11.7 | | | |
| 21.30 | 4.168 | 26.1 | 26.09 | 3.413 | 5.3 | | | |
| 22.45 | 3.958 | 40.6 | 27.94 | 3.190 | 6.0 | | | |
| 24.26 | 3.665 | 24.5 | 29.89 | 2.987 | 17.7 | | | |
| 24.89 | 3.575 | 11.2 | 32.59 | 2.746 | 3.7 | | | |
| 25.75 | 3.458 | 10.6 | 36.38 | 2.467 | 4.2 | | | |
| 26.27 | 3.389 | 11.6 | | | | | | |
| 28.26 | 3.155 | 7.4 | | | | | | |

**Tab. 8. XRPD - characteristic powder diffraction peaks of Tenofovir tartrate Phase 4, 5 and 6**

| Phase 4 | | | Phase 5 | | | Phase 6 | | |
|---|---|---|---|---|---|---|---|---|
| Pos. [°2Th.] | d-spacing [A] | Rel. Int. [%] | Pos. [°2Th.] | d-spacing [A] | Rel. Int. [%] | Pos. [°2Th.] | d-spacing [A] | Rel. Int. [%] |
| 5.06 | 17.445 | 64.9 | 3.53 | 24.995 | 84.9 | 4.91 | 17.968 | 26.7 |
| 8.96 | 9.859 | 93.0 | 4.16 | 21.206 | 43.9 | 9.88 | 8.941 | 17.8 |
| 12.93 | 6.839 | 76.7 | 6.65 | 13.290 | 42.1 | 10.53 | 8.395 | 100.0 |
| 13.65 | 6.482 | 100.0 | 6.94 | 12.732 | 69.7 | 13.58 | 6.517 | 19.6 |
| 14.64 | 6.047 | 65.3 | 7.63 | 11.581 | 45.3 | 14.89 | 5.944 | 11.9 |
| 16.23 | 5.457 | 55.4 | 8.50 | 10.392 | 100.0 | 15.61 | 5.672 | 9.2 |
| 17.68 | 4.986 | 49.6 | 9.31 | 9.493 | 29.2 | 17.41 | 5.090 | 26.6 |
| 18.25 | 4.858 | 29.8 | 10.41 | 8.489 | 18.0 | 18.50 | 4.792 | 37.1 |
| 19.91 | 4.455 | 59.9 | 11.58 | 7.636 | 10.8 | 19.10 | 4.643 | 39.0 |
| 20.35 | 4.361 | 33.3 | 12.25 | 7.217 | 26.6 | 21.18 | 4.191 | 46.1 |
| 21.00 | 4.227 | 57.6 | 13.17 | 6.719 | 24.6 | 24.83 | 3.582 | 21.0 |
| 21.63 | 4.106 | 42.6 | 13.99 | 6.323 | 18.2 | 27.21 | 3.275 | 7.5 |
| 22.11 | 4.017 | 23.5 | 16.20 | 5.468 | 30.6 | 34.88 | 2.570 | 7.8 |
| 22.75 | 3.905 | 33.2 | 17.22 | 5.146 | 67.4 | | | |
| 23.13 | 3.843 | 27.1 | 18.13 | 4.889 | 20.3 | | | |
| 23.63 | 3.762 | 31.1 | 18.97 | 4.674 | 58.9 | | | |
| 23.91 | 3.718 | 31.9 | 19.87 | 4.465 | 54.0 | | | |
| 25.48 | 3.493 | 34.6 | 20.39 | 4.353 | 26.1 | | | |
| 26.10 | 3.411 | 24.7 | 21.18 | 4.192 | 27.9 | | | |
| 29.60 | 3.016 | 12.2 | 21.78 | 4.078 | 9.6 | | | |
| 30.53 | 2.926 | 13.0 | 22.72 | 3.911 | 53.0 | | | |
| 31.08 | 2.875 | 14.7 | 25.07 | 3.549 | 17.1 | | | |
| | | | 25.47 | 3.494 | 18.5 | | | |
| | | | 26.23 | 3.395 | 14.3 | | | |
| | | | 27.62 | 3.227 | 9.2 | | | |
| | | | 28.42 | 3.138 | 8.0 | | | |
| | | | 30.16 | 2.961 | 6.6 | | | |
| | | | 31.65 | 2.825 | 7.7 | | | |

### Description of drawings

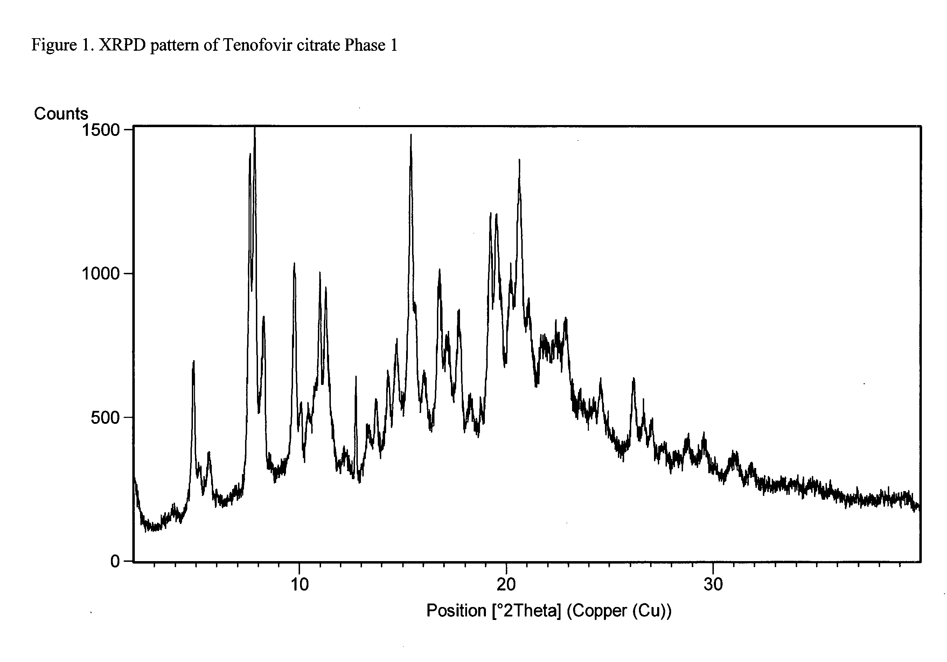

Figure 1. XRPD pattern of Tenofovir citrate Phase 1

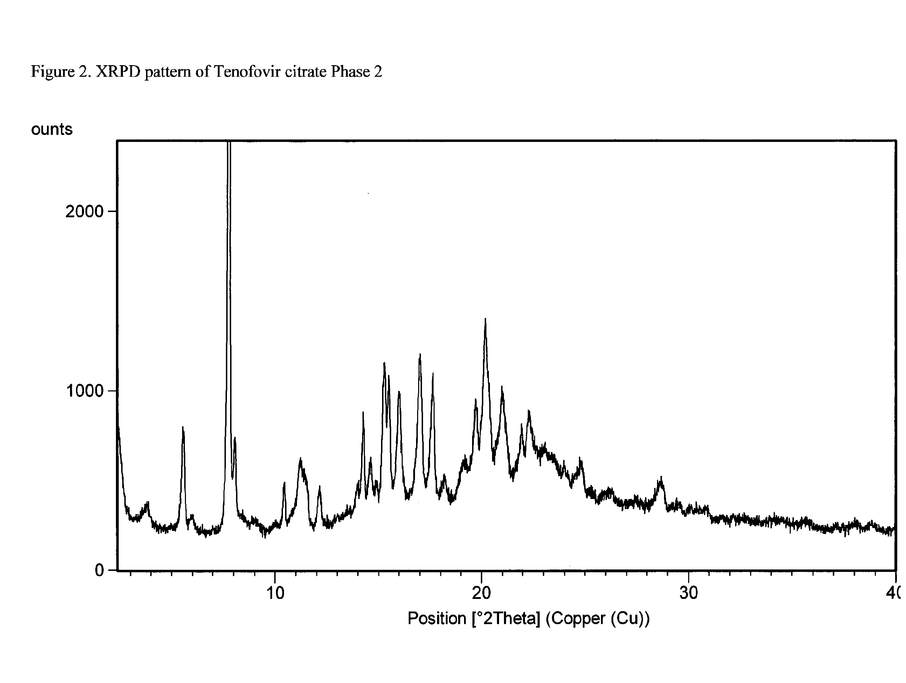

Figure 2. XRPD pattern of Tenofovir citrate Phase 2

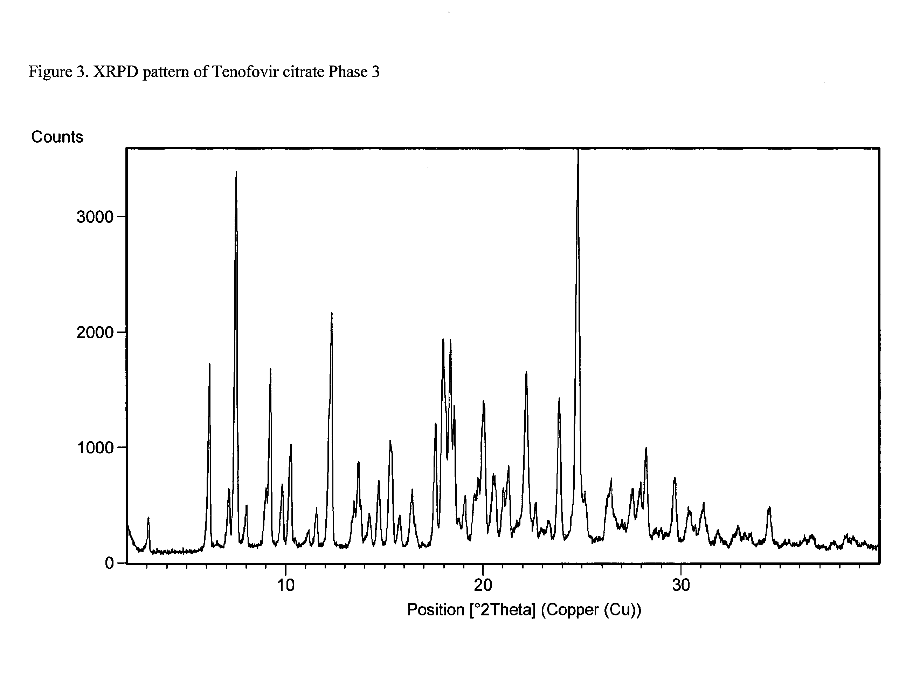

Figure 3. XRPD pattern of Tenofovir citrate Phase 3

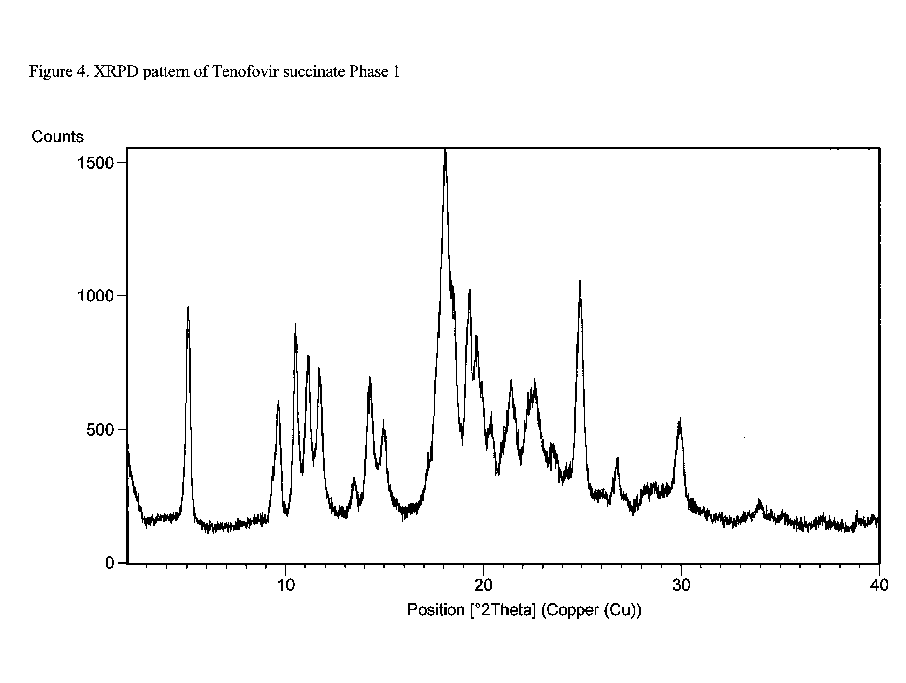

Figure 4. XRPD pattern of Tenofovir succinate Phase 1

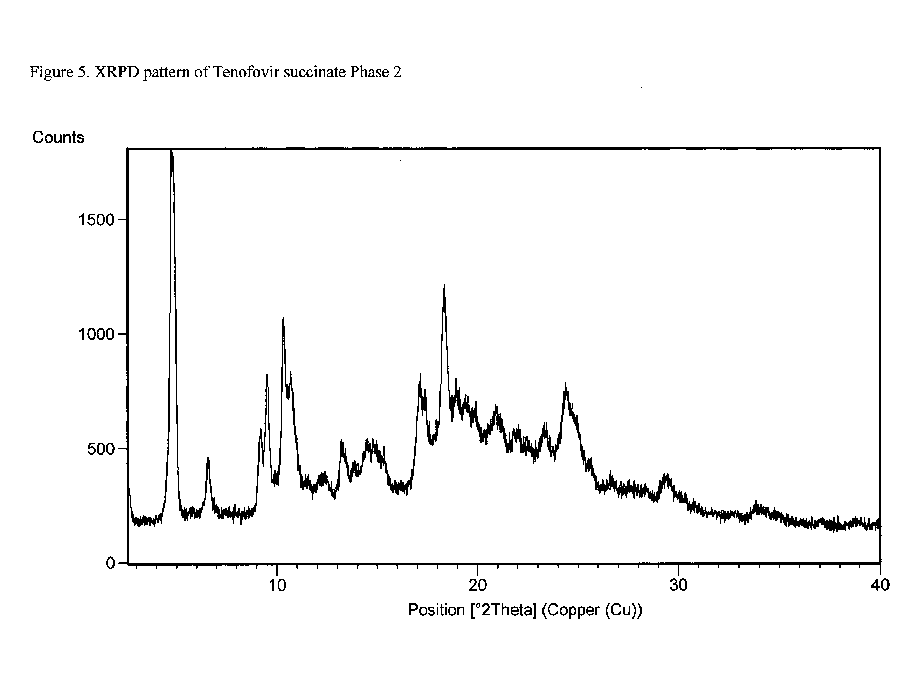

Figure 5. XRPD pattern of Tenofovir succinate Phase 2

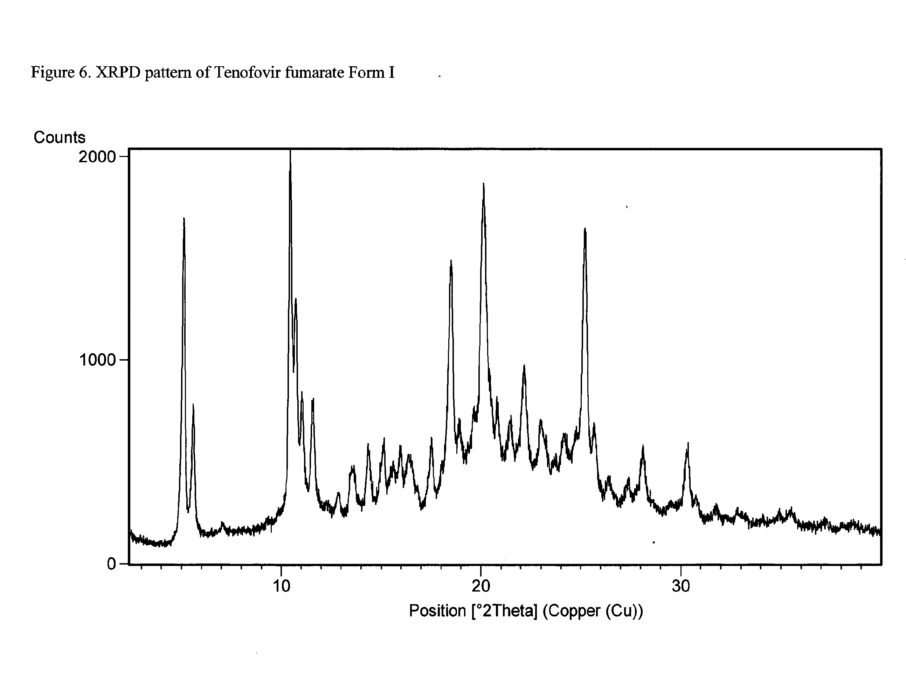

Figure 6. XRPD pattern of Tenofovir fumarate Form I

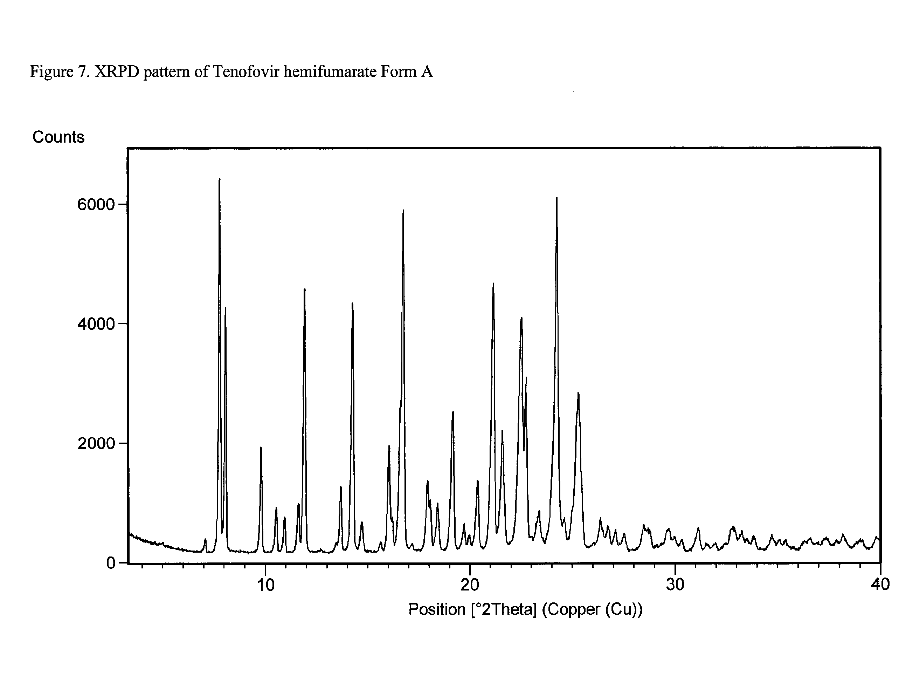

Figure 7. XRPD pattern of Tenofovir hemifumarate Form A

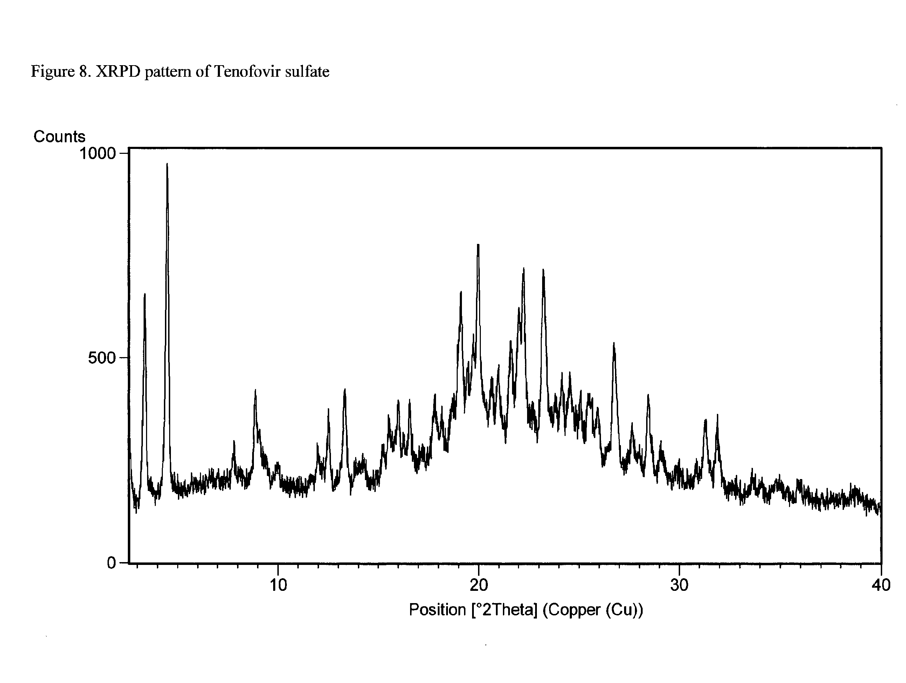

Figure 8. XRPD pattern of Tenofovir hydrogensulphate

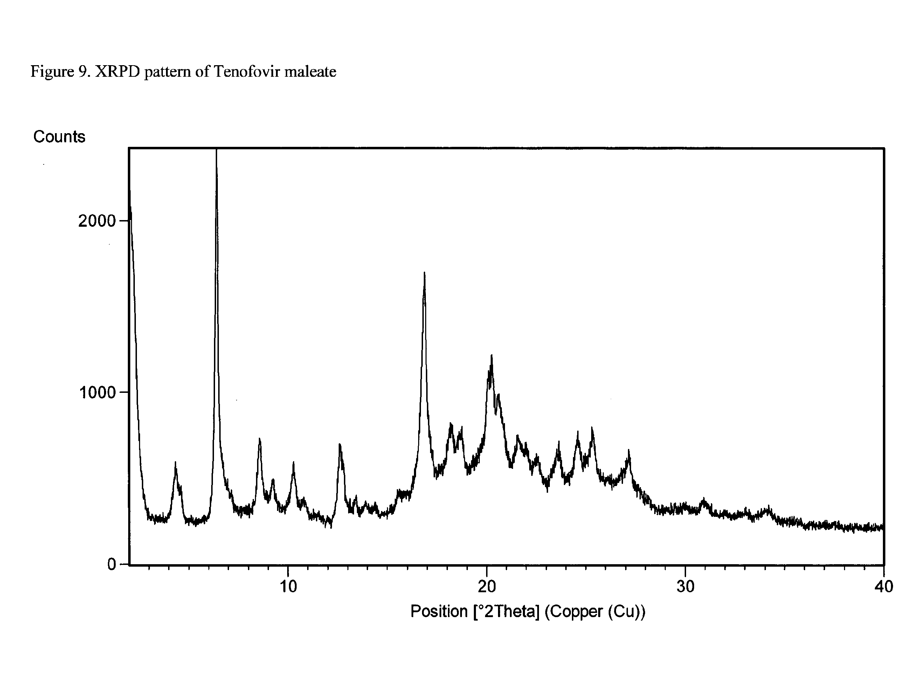

Figure 9. XRPD pattern of Tenofovir maleate

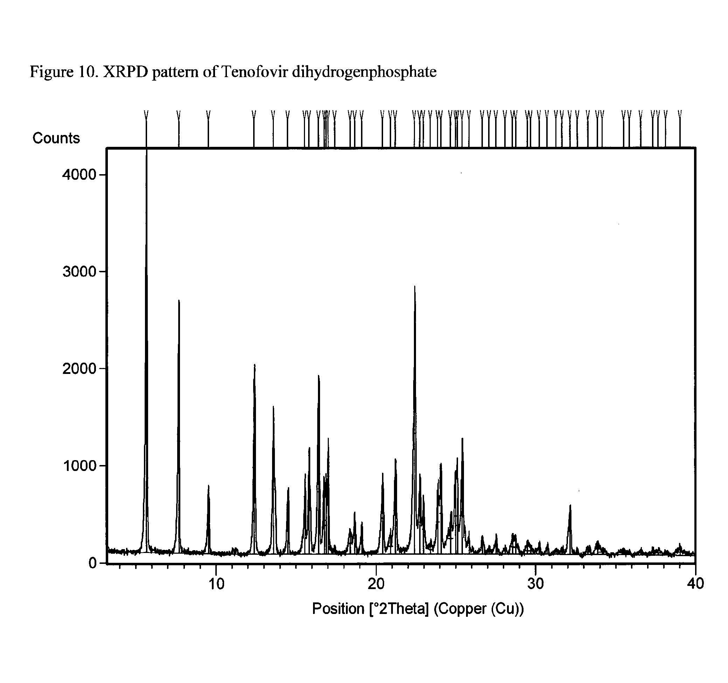

Figure 10. XRPD pattern of Tenofovir dihydrogenphosphate

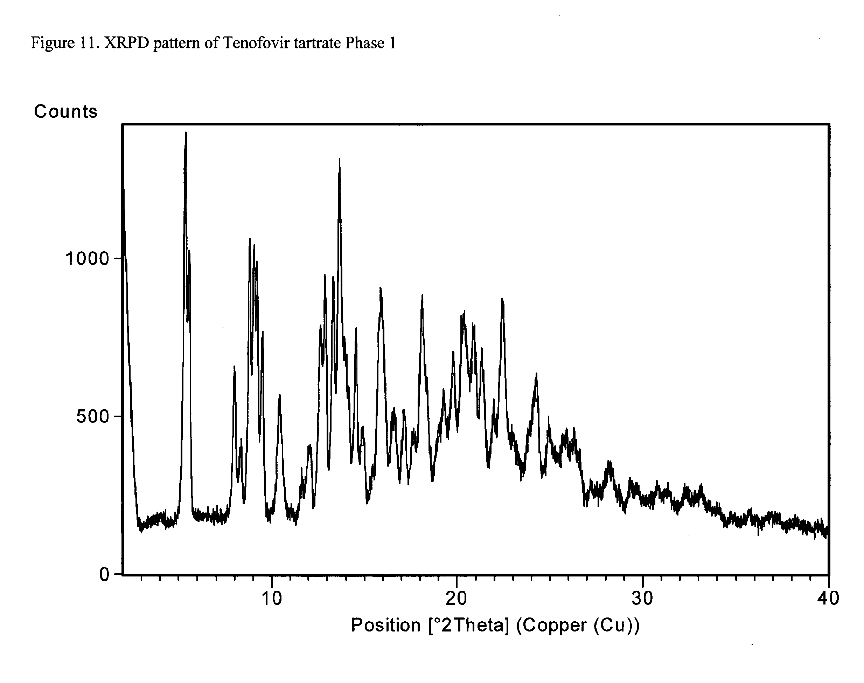

Figure 11. XRPD pattern of Tenofovir tartrate Phase 1

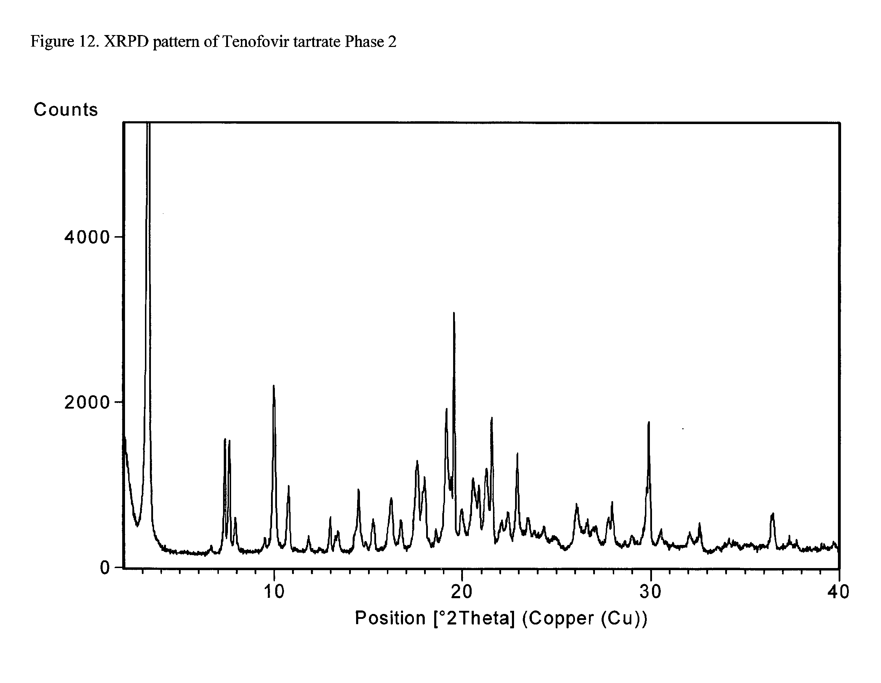

Figure 12. XRPD pattern of Tenofovir tartrate Phase 2

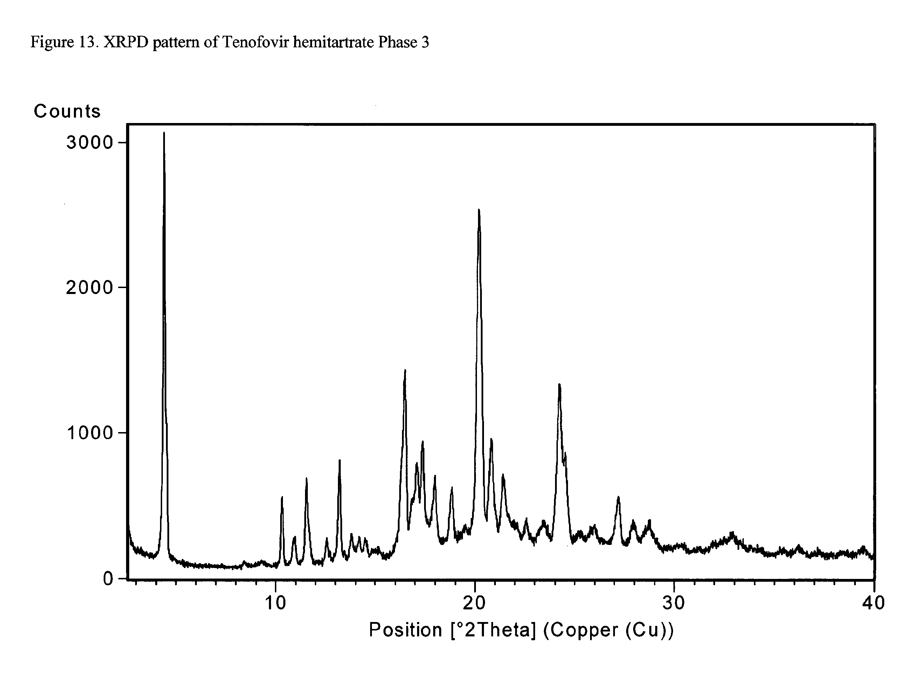

Figure 13. XRPD pattern of Tenofovir hemitartrate Phase 3

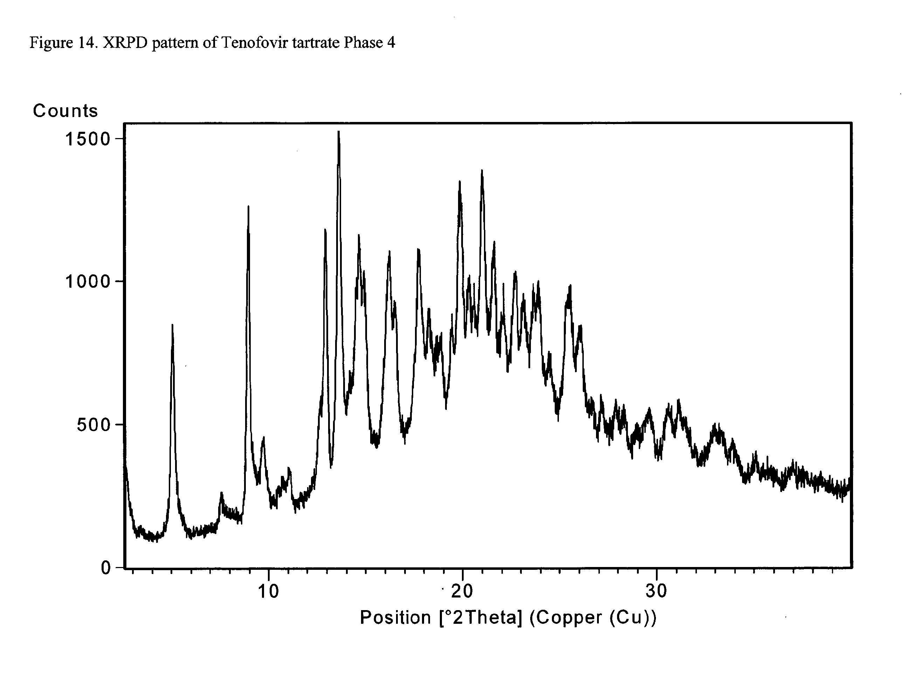

Figure 14. XRPD pattern of Tenofovir tartrate Phase 4

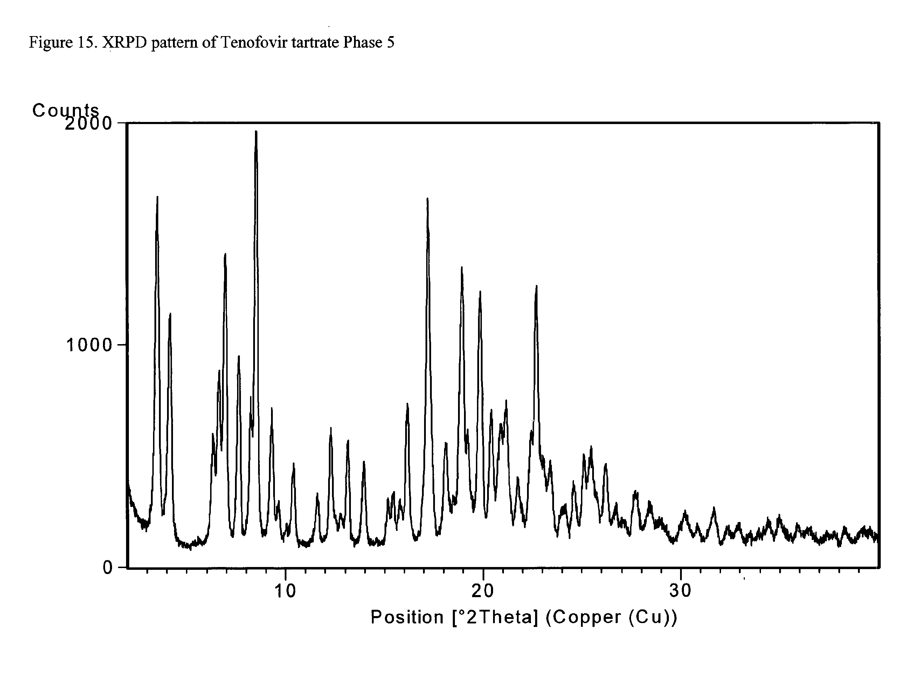

Figure 15. XRPD pattern of Tenofovir tartrate Phase 5

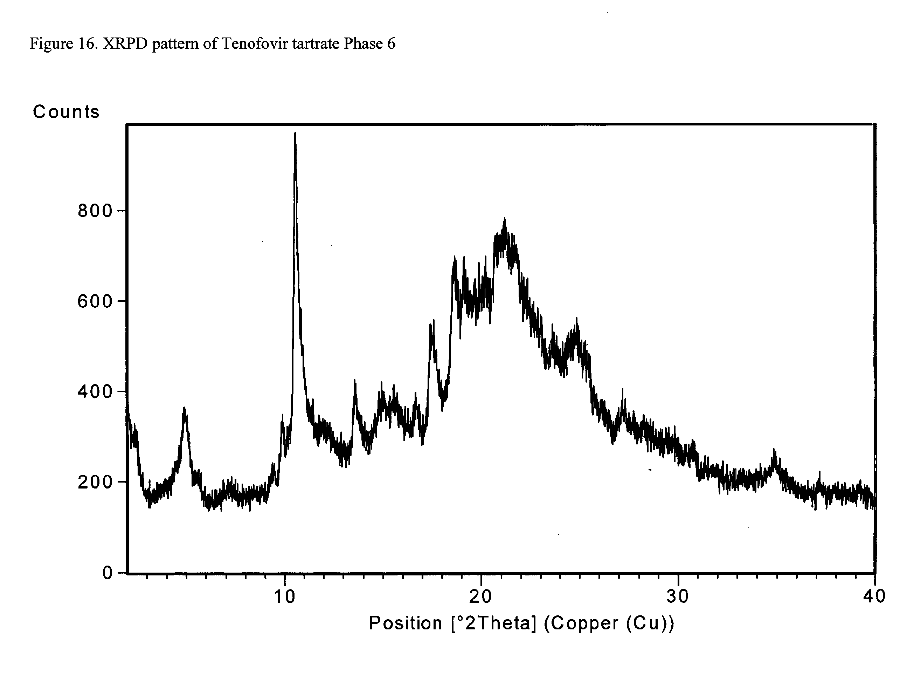

Figure 16. XRPD pattern of Tenofovir tartrate Phase 6

### Examples:

### Example 1: Synthesis of (R)-1-(6-amino-9H purin-9-yl)propan-2-ol

The Buchi reactor (10 L) was preheated to 150 °C and traces of moisture were blown away with the nitrogen stream. The reactor was filled with argon and cooled down to ~ 70 °C, dry DMF (4 L, ~ 20 ppm of H₂O, distilled from P₂O₅) was added and stirring was switched on (200 rev/min) with heating at 100 °C. When the desired temperature was reached, adenine (A, 150 g, 1 mol) and K₂CO₃ (72.5 g, 0.525 mol) were added. The reaction temperature was increased to 120 °C. The coarse suspension changed into fine suspension of the potassium salt of adenine and CO₂ was being released at the same time. When temperature of 120 °C was reached, carbonate (*R*)-C (133 g, 1.3 mol) was immediately and quickly added. The reaction mixture was stirred at 120 °C and continuously monitored by TLC. The full conversion was observed at ~ 8 h. The reaction mixture was then cooled to RT and precipitated solid was filtered off, the reactor was rinsed with EtOH, and the solid washed quickly with EtOH (2 x 100 mL). The filtrate was concentrated *in vacuo* at 60 °C, so that ~ 200 mL of DMF are left in the flask, i.e. ~ 400 mL of solvents were removed. The product usually started to crystallize during the concentration/evaporation process. EtOH (400 mL) was added to the residue and this mixture was sonicated at 70 °C for 2 h to convert the formylated by-product to the desired product 1 and to afford nicely crystallized product 1. After cooling in an ice bath, the product was filtered off, washed (2 x 50 mL iced EtOH), and dried at 60°C for 4 days (under vacuum with P₂O₅) to give 149 g (72%) of 1 (98% purity, HPLC). Repeated experiments afforded up to 81 % yields of the product 1.

### Example 2: Synthesis of diesters of (R)-9-[2-(phosphonomethoxy)propyl]adenine

The Buchi reactor (10 L) was preheated to 150 °C and traces of moisture were blown away with the nitrogen stream. The reactor was filled with argon and cooled down to RT, dry DMF (5 L, ~ 20 ppm of H₂O, distilled from P₂O₅) was added and stirring was switched on (200 rev/min) at RT. Starting compound 1 (111.3 g, 0.576 mol) and tosylate 2b (222.1 g, 0.634 mol) were added. When the starting material was dissolved at RT, the reaction mixture was cooled down to -10 °C. Then the reaction mixture was cooled to -15 °C and (tBuO)₂Mg (147.3, 0.864 mol) was started to be added continuously. White suspension was formed during the addition of (tBuO)₂Mg at -10 °C, which was continuously consumed by the reaction. The reaction was monitored by TLC. The reaction was completed in ~ 44 h. Then H₂O (200 mL) was added to stop the reaction (and to destroy unreacted tosylate). The reaction mixture was slowly warmed up to RT and solvents were removed at 60 °C *in vacuo.* The residue was dissolved in H₂O (1 L) and the solution was placed into a continuous extractor and was extracted with CH₂Cl₂ (TLC showed none product in the water phase). The organics were dried (MgSO₄) and evaporated at 30 °C *in vacuo.* Hexane (200 mL) was added to the thick oily residue, this mixture was sonicated for 20 min, and hexane phase was removed (impurities soluble in hexane can be removed by this procedure). EtOAc (150 mL) was added to the residue and the mixture was sonicated until all product crystallized. After cooling in ice bath, the crystals were filtered off, washed (2 x 100 mL of mixture hexane/EtOAc, 5 °C), and dried at 60°C for 4 days (under vacuum with P₂O₅) to give 115.5 g (54%) of 3b (93% purity). The yield were subsequently improved to up to 91 %.

Note: instead of tosylate 2b can be used bromo or iodo analogues 2c-2f, which can be easily prepared in large scale according to our published MW-assisted procedure, 2c,d reacts more slowly and gives slightly lower yields (~ 5-8% less) then 2b; the advantage of the methods using iPr esters (in literature and patents are mostly used Me and Et esters) is their higher stability in nucleophilic environment and thus lower formation of alkylated by-products, also isolation of iPr esters is more facile and convenient as they have higher affinity to organic solvents - easier extraction, and their crystallization seems to be easier; they are also more easily removed in the next step if MW-assisted hydrolysis with HCl is involved

### Example 3: Synthesis of (R)-9-[2-(phosphonomethoxy)propyl]adenine

Method A: A mixture of diesters of (R)-9-[2-(phosphonomethoxy)propyl]adenine (10 g, 27 mmol) and aqueous HBr (27.23 g, 162 mmol) was stirred at 90 °C for 5 h and the conversion was monitored by TLC. When the reaction was completed, the solvents were evaporated, the residue was codistilled with H₂O (3 x 20 mL), dissolved in water, cooled to 5 °C, and pH was adjusted to 2-3 with ground NaOH. Crystallization from H₂O/EtOH gave 6.28 g (81%) of the product (R)-9-[2-(phosphonomethoxy)propyl]adenine.

Method B: A mixture of diesters of (R)-9-[2-(phosphonomethoxy)propyl]adenine (18.6 g, 50 mmol) and aq. HCl (1 M, 100 mL) in a MW vial was irradiated at 140 °C for 30 min. The reaction mixture was evaporated to dryness at 50 °C *in vacuo* and crystallized from H₂O, filtered, washed with H₂O and acetone, and dried at 60°C for 4 days (under vacuum with P₂O₅) to give 12.97 g (90%) of the product (R)-9-[2-(phosphonomethoxy)propyl]adenine. The reaction was successfully carried our using several different MW reactors: 1) CEM Discover®, single-mode cavity with focused MW heating (MW power supply 0-300 W, 1 W increments, IR temperature sensor, open or closed vessel mode, pressure range 0-20 bar, 10 ml or 80 ml vials); 2) Milestone BatchSYNTH®, instrument for large scale procedures (MW power supply 0-1000 W, 10 W increments, internal temperature sensor, open or closed vessel mode, pressure range 0-30 bar, 250 ml vial); 3) Milestone FlowSYNTH®, continuous flow microwave reactor for scale-up (MW power supply 0-1000 W, 10 W increments, two internal temperature sensors, continuous flow mode, pressure range 0-30 bar, 200 ml vessel, flow rate 10-100 ml/min).

### Example 4: Synthesis of Tenofovir disoproxil

Starting compound 4 (10 g, 34.8 mmol) was dried at 100 °C and 0.1 mbar overnight, and cyclohexane (80 mL) was added, followed by azeotropic distillation. The rest of the cyclohexane was removed *in vacuo.* After cooling the mixture to RT, dry NMP (40 mL) was added and mixture was stirred for 30 min at RT under argon atmosphere. Then Et₃N (10.6 g, 14.7 mL, 105 mmol) was added to the reaction mixture and stirring continued at 45 °C for 1 h. Subsequently, chloromethyl isopropyl carbonate (CMIC, 26.5 g, 174 mmol) was added and the reaction was stirred at 60 °C for 5 h. The reaction was cooled to RT and cyclohexane (80 mL) was added and the mixture stirred for 15 min and then let settle down for 30 min. Organic phase was removed and the same procedure was repeated once more. Then, the reaction mixture was diluted with cold EtOAc (100 mL) and organic phase was washed with chilled water (2 x 50 mL, 5 °C). Water phase was washed with cold EtOAc (1 x 50 mL) and combined organic fractions (EtOAc) were washed with chilled brine (10 %, 5 °C, 2 x 50 mL) and dried (Na₂SO₄). Solvents were immediately evaporated *in vacuo* at 30 °C and the product was codistilled with dry toluene (50 mL) to afford 14.48 g (80%, 75% purity according to HPLC) as yellowish oil (crude Tenofovir disoproxil).

### Example 5: Preparation of Tenofovir disoproxil fumarate

Method A: Oily crude Tenofovir disoproxil (1.5 g, 75% purity according to HPLC) was dissolved in isopropanol (3.75 mL), stoichiometric equivalent of fumaric acid was added and mixture was heated to 60°C for 10 minutes. Then the solution was cooled to room temperature and stirred until precipitation occurred. The mixture was diluted using 5 mL of isopropanol and the suspension was filtrated and washed using 5 mL of isopropanol. The product was obtained in 42 % yield and purity >95 %. The subsequent washing leads to purity improvement but decrease of yield.

Method B: Oily crude Tenofovir disoproxil (1.5 g, 75% purity according to HPLC) was dissolved in cyclohexane (3.75 mL), stoichiometric equivalent of fumaric acid was added and mixture was heated to 60°C for 10 minutes. Then the solution was cooled to room temperature and stirred until precipitation occurred. The mixture was diluted using 5 mL of cyclohexane and the suspension was filtrated and washed using 5 mL of cyclohexane. The product was obtained in 73 % yield and purity >95 %. The subsequent washing leads to purity improvement but decrease of yield.

Method C: Oily crude Tenofovir disoproxil (1.5 g, 75% purity according to HPLC) was dissolved in isobutyl acetate (3.75 mL), stoichiometric equivalent of fumaric acid was added and mixture was heated to 60°C for 10 minutes. Then the solution was cooled to room temperature and stirred until precipitation occurred. The mixture was diluted using 5 mL of isobutyl acetate and the suspension was filtrated and washed using 5 mL of isobutyl acetate. The product was obtained in 70 % yield and purity >95 %. The subsequent washing leads to purity improvement but decrease of yield.

Method D: Oily crude Tenofovir disoproxil (1.5 g, 75% purity according to HPLC) was dissolved in acetone (3.75 mL), stoichiometric equivalent of fumaric acid was added and mixture was heated to 50°C for 10 minutes. Then the solution was cooled to room temperature and stirred until precipitation occurred. The mixture was diluted using 5 mL of acetone and the suspension was filtrated and washed using 5 mL of acetone. The product was obtained in 54 % yield and purity >95 %. The subsequent washing leads to purity improvement but decrease of yield.

Method E: Oily crude Tenofovir disoproxil (1.5 g, 75% purity according to HPLC) was dissolved in isopropanol / toluene (1:1) (3.75 mL), stoichiometric equivalent of fumaric acid was added and mixture was heated to 60°C for 10 minutes. Then the solution was cooled to room temperature and stirred until precipitation occurred. The mixture was diluted using 5 mL of isopropanol / toluene (1:1) and the suspension was filtrated and washed using 5 mL of isopropanol / toluene (1:1). The product was obtained in 43 % yield and purity >95 %. The subsequent washing leads to purity improvement but decrease of yield.

Method F: Oily crude Tenofovir disoproxil (1.5 g, 75% purity according to HPLC) was dissolved in toluene (3.75 mL), stoichiometric equivalent of fumaric acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in 94 % yield and purity >95 %. The subsequent washing leads to purity improvement but decrease of yield.

Method G: Oily crude Tenofovir disoproxil (0.1 g, 75% purity according to HPLC) was dissolved in solvent (1 mL), stoichiometric equivalent of fumaric acid was added and mixture was heated to 60°C for 10 minutes, then the solution was cooled to room temperature, sonicated for 10 minutes and left for 30 minutes to crystallize. The mixture was centrifuged (10 minutes, 11000.g), supernatant was removed and sediment was dried. Subsequently the sediment was repeatedly (0 - 6 times) dissolved in solvent (1 mL), sonicated (10 min), left to crystallize (30 min), centrifuged (10 min, 11000.g), supernatant was removed and sediment was dried. After appropriate repetitions (0 - 6 times) the dried sediment was weighed and purity was analyzed.

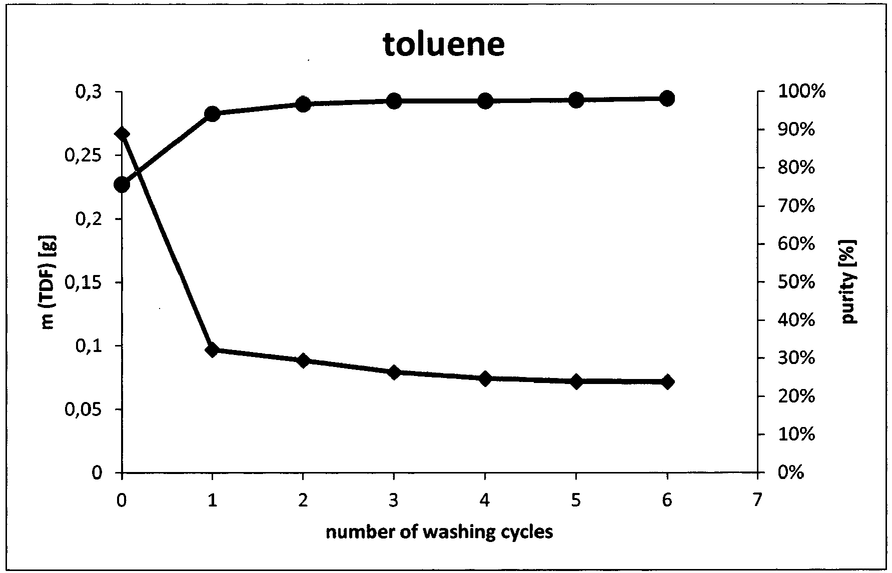

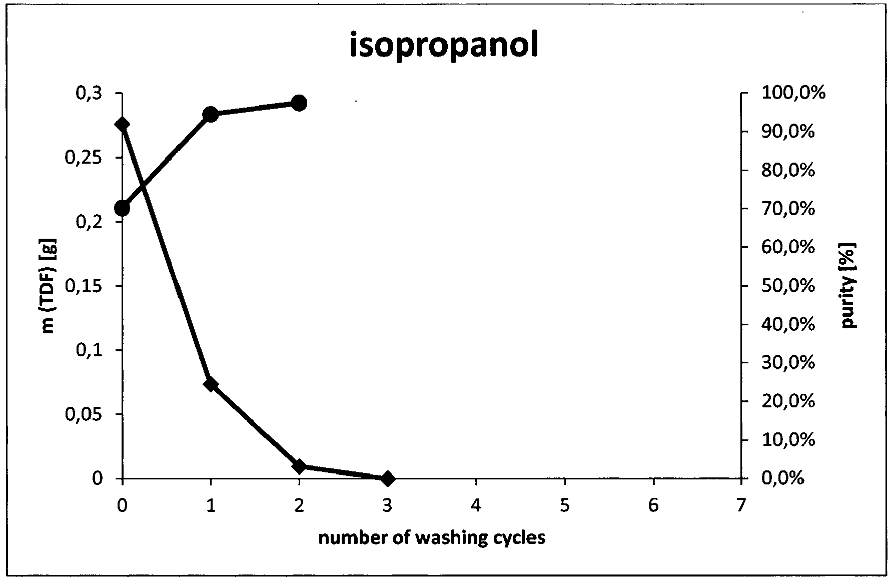

### Example 6: Preparation of Tenofovir disoproxil citrate

Oily crude Tenofovir disoproxil (1.5 g, 75% purity according to HPLC) was dissolved in toluene (3 mL), stoichiometric equivalent of citric acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in high yield and high purity.

### Example 7: Preparation of Tenofovir disoproxil dihydrogenphosphate

Oily crude Tenofovir disoproxil (1.5 g, 75% purity according to HPLC) was dissolved in toluene (3 mL), 1.1 -1.5 stoichiometric equivalent of phosphoric acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in high yield and high purity.

### Example 8: Preparation of Tenofovir disoproxil hydrogensulphate

Oily crude Tenofovir disoproxil (1.5 g, 75% purity according to HPLC) was dissolved in toluene (3 mL), stoichiometric equivalent of sulphuric acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in high yield and high purity.

### Example 9: Preparation of Tenofovir disoproxil lactate

Oily crude Tenofovir disoproxil (1.5 g, 75% purity according to HPLC) was dissolved in toluene (3 mL), stoichiometric equivalent of lactic acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in high yield and high purity.

### Example 10: Preparation of Tenofovir disoproxil tartarate

Oily crude Tenofovir disoproxil (1.5 g, 75% purity according to HPLC) was dissolved in toluene (3 mL), stoichiometric equivalent of tartaric acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in high yield and high purity.

### Example 11: Preparation of Tenofovir disoproxil succinate

Oily crude Tenofovir disoproxil (1.5 g, 75% purity according to HPLC) was dissolved in toluene (3 mL), stoichiometric equivalent of succinic acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in high yield and high purity.

### Example 12: Preparation of Tenofovir disoproxil hemifumarate

Oily crude Tenofovir disoproxil (1.5 g, 75% purity according to HPLC) was dissolved in toluene (3 mL), 0.5 equivalent of fumaric acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in high yield and high purity.

### Example 13: Preparation of Tenofovir disoproxil oxalate

Oily crude Tenofovir disoproxil (1.5 g, 75% purity according to HPLC) was dissolved in toluene (3 mL), stoichiometric equivalent of oxalic acid was added and mixture was heated to 60°C for 10 minutes. Then the solution was cooled to room temperature and stirred until precipitation occurred. The mixture was diluted using 5 mL of toluene and the suspension was filtrated and washed using 5 mL of toluene. The product was obtained in high yield and high purity.

## Claims

1. An improved process for the preparation of Tenofovir disoproxil and pharmaceutically acceptable salts thereof, comprising following steps:
a) alkylation of adenine with (*R*)-4-methyl-1,3-dioxolan-2-one and isolation of (*R*)-1-(6-amino-9*H*-purin-9-yl)propan-2-ol;
b) alkylation of (*R*)-1-(6-amino-9*H*-purin-9-yl) propan-2-ol with a dialkyl p-toluenesulphonyloxymethylphosphonate or dialkyl halomethylphosphonate to give dialkylester of (R)-9-[2-(phosphonomethoxy)propyl] adenine;
c) preparation of (R)-9-[2-(phosphonomethoxy)propyl]adenine ((*R*)-PMPA; Tenofovir) by dealkylation of the phosphonate moiety with a mineral acid under microwave irradiation;
d) preparation of Tenofovir disoproxil;
e) preparation of the fumarate salt or other pharmaceutically acceptable salt of Tenofovir disoproxil.

2. The process according to claim 1, **characterized in that** the alkylation of adenine with (*R*)-4-methyl-1,3-dioxolan-2-one is performed in DMF solvent at presence of a base and the isolation of (*R*)-1-(6-amino-9*H*-purin-9-yl)propan-2-ol from the reaction mixture comprises an addition of EtOH under sonication.

3. The process according to claim 1, **characterized in that** (R)-1-(6-amino-9H-purin-9-yl)propan-2-ol is alkylated with a dialkyl p-toluenesulphonyloxymethylphosphonate, preferably diisopropyl p-toluenesulphonyloxymethylphosphonate.

4. The process according to claim 1, **characterized in that** (R)-1-(6-amino-9H-purin-9-yl)propan-2-ol is alkylated with a dialkyl halomethylphosphonate, wherein the halogen is Br or I.

5. The process according to claim 4, **characterized in that** (R)-1-(6-amino-9H-purin-9-yl)propan-2-ol is alkylated with a phosphonate compound selected from diethyl bromomethylphosphonate, diisopropyl bromomethylphosphonate, diethyl iodomethylphosphonate, and diisopropyl iodomethylphosphonate.

6. The process according to claim 1, **characterized in that** the mineral acid used in the preparation of (R)-9-[2-(phosphonomethoxy)propyl]adenine (Tenofovir) from the dialkylester of (R)-9-[2-(phosphonomethoxy)propyl]adenine is selected from a group consisting of aq. HBr, aq. HCl, HBr in acetic acid and HCl gas in isopropyl alcohol, preferably of aq. HBr and aq. HCl.

7. The process according to claim 1, **characterized in that** it further comprises isolation of (R)-9-[2-(phosphonomethoxy)propyl]adenine (Tenofovir) from water or a mixture water/EtOH with 0-90% of EtOH content.

8. The process according to claim 1, **characterized in that** Tenofovir fumarate or other pharmaceutically acceptable salt thereof is prepared by the reaction of Tenofovir disoproxil and an appropriate acid in the presence of toluene or a mixture thereof, provided that toluene content is at least 50% (V/V).

9. The process according to claim 8, **characterized in that** Tenofovir fumarate or other pharmaceutically acceptable salt thereof is consequently isolated and washed with an organic solvent, such as toluene and/or mixtures thereof, or isopropanol and/or mixtures thereof, preferably 50-100% toluene (V/V), most preferably 100% toluene.

10. The process according to any preceding claim, **characterized in that** the pharmaceutically acceptable salt of Tenofovir disoproxil is selected form the group consisting of fumarate, maleate, dihydrogenphosphate, hydrogensulphate, oxalate, saccharate, tartrate, salicylate, lactate, succinate and hemifumarate.
